# EUROPEAN PATENT SPECIFICATION

(11) **EP 0 754 572 B1**
(45) Date of publication and mention of the grant of the patent: **22.03.2000**
(21) Application number: 96202705.8
(22) Date of filing: 06.08.1992
(51) Int. Cl.: B60C 5/16, B60C 15/024

(54) **A pneumatic tyre**
Ein Luftreifen
Bandage pneumatique

(30) Priority: 09.08.1991 JP 22473091; 16.06.1992 JP 18325092
(43) Date of publication of application: 22.01.1997
(62) Divisional of application: 92307206.0
(73) Proprietor: SUMITOMO RUBBER INDUSTRIES LIMITED, Kobe-shi, Hyogo-ken (JP)
(72) Inventor: Tagashira, Kenji, Kobe-shi, Hyogo-ken (JP); Uemura, Yoshiaki, Kobe-shi, Hyogo-ken (JP); Yoshida, Masanao, Tsuyama-shi, Okaya-ma-ken (JP)
(74) Representative: Stewart, Charles Geoffrey

(56) References cited:
- FR-A- 2 409 163
- FR-A- 2 536 017
- GB-A- 2 011 324

## Description

The invention relates to a pneumatic tyre capable of maintaining stable running by inhibiting the formation of gaps between the outer surface of the bead and the rim flange so as to prevent rim deviation, without loss of inflation pressure.

In a pneumatic tyre, for example, a passenger car tyre, as vehicle speeds are becoming higher, the frequency of abrupt starting and abrupt stopping becomes higher. To withstand this a strong fitting force between the beads and the rim is required. On the other hand, the use of tubeless tyres is increasing for high speed running and such a tubeless tyre is mounted on a rim with a particularly strong fitting force. Tyres for buses and trucks are exposed to heavy load, and also are fitted to their rims with a strong fitting force.

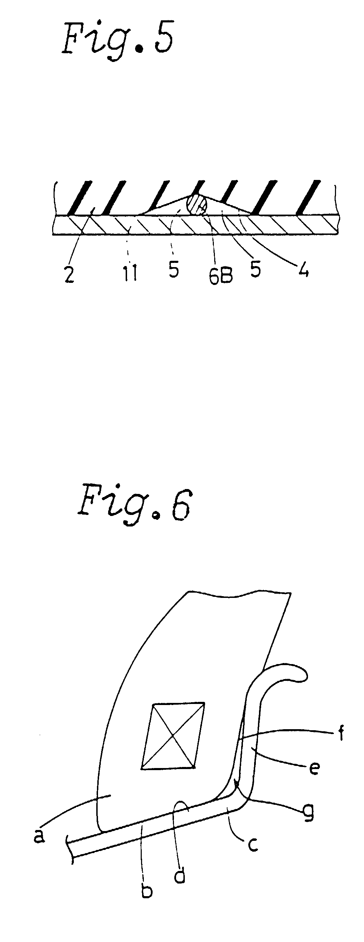

When assembling such a tightly fitting tyre to its rim (c), as shown in Fig. 6, the bead bottom surface (b) of the bead (a) is tightly fitted to the rim seat (d) without a gap. However the bead outer surface (f) located by the rim flange (e) starts by contacting the upper part of the flange (e) on assembling the tyre onto its rim (c), so that a gap (g) is formed between the lower part of the outer side surface (f) and the flange (e).

This gap (g) decreases gradually as the tyres run and then fully contact the outer side surface (f). With this decrease of the gap (g), however, the assembly precision varies, and the fitted portions of the tyre and its rim are changed. This affects the balance of the assembly and the distribution of force variations on running. Furthermore, the contact area of the bead and rim decreases, and further rim deviation may occur between the bead and rim seat when sudden braking is applied, which disturbs the straightforward motion and lowers the durability.

Thus although the force variation and uniformity of the assembly are checked before shipping, there is a difference in assembly precision when the tyre is run by the user. In order to prevent formation of such force variations, there has been a keen demand for the development of a tyre which does not result in such gaps even if assembled onto the rim without any particular attention by the user.

It is a primary object of the invention to provide a pneumatic tyre capable of maintaining running stability and uniformity by inhibiting the formation of gaps between the bead outer surface and the rim flange so as to prevent rim deviation, without loss of inflation pressure.

As a result of repeated studies and experiments to satisfy the above, the present inventors reached the following conclusions.

Formation of a closed gap between the bead outer surface the and rim flange may be inhibited at the time of rim assembling by:
(1) Installing exhaust means capable of communicating between the gap and outside when assembled onto the rim;
(2) Forming this exhaust means by providing grooves or protrusions on the bead outer surface; and
(3) Setting the inner end of the exhaust means at a position remote from the bead bottom surface at a specific radial distance.

Incidentally, the use of protrusions or grooves on the bead outer surface is shown in the Japanese Patent Publication No. 58-57321, but this proposal is intended to prevent swelling of the tyre when the tubeless tyre is mounted on a wheel having a rim diameter smaller than the design value. In the above proposal, in order to achieve this object, the inner end of the grooves or protrusions is extended nearly to the bead bottom surface. If that proposal is used to eliminate the gap caused when assembling onto a rim, the air accumulated in the tyre inner space may be forced out. Accordingly, it is found essential to keep the inner end position of the exhaust means at a certain distance from the bead bottom surface.

According to the present invention, a pneumatic tyre for mounting on a normal rim, comprises a pair of beads each having a bead bottom surface seating on a rim seat of the normal rim and bead outer surface connected to the bead bottom surface and arranged to abut a rim flange of the normal rim, the bead outer surface having exhaust means composed of protrusions extending outwards in the radial direction from an inner end of the exhaust means so as to form an air passage for escaping air from between the rim flange and the bead outer surface on assembly of the tyre to the rim, and wherein the inner end of the exhaust means is positioned within a region remote from a bead base line by a distance of at least 1.0 and not more than 1.5 times a separating point height Fh defined as the height in the radial direction from the bead base line to a separating point at which the bead outer surface separates from the rim flange and the outer end is spaced from the inner end by a distance of 5 to 15 mm in the radial direction.

Here, the bead base line refers to the reference of the nominal rim NRD of the rim which is the radius to the tyre axial line passing through the bead heel point which is the imaginary point at which the rim seat line intersects the rim flange line.

When the bead outer surface moves to the rim flange on assembly, air existing between the bead outer surface and rim flange is exhausted through the exhaust means on the bead outer surface.

As a result, air is not left in the gap along the bead outside surface near the bead bottom surface as shown in Fig. 6.

Therefore, the nonuniformity of the tyre to rim assembly likely to occur conventionally as the gap decreases with the passing of the time in tyre running will decrease and force variation due to tyre Radial Runout (RRO) and imbalance due to loss of rim assembly precision does not increase. As a result, even in the case of long-term running, vibrations do not increase, and the running stability and ride comfort are maintained and uniform fitting and contact of the tyre bead and rim are retained, and therefore tyre/rim deviation in sudden braking is prevented while durability is enhanced. In addition, it is not necessary to pay special attention to the rim assembly procedure.

The exhaust means extend outwards in the radial direction from the inner end located within a region remote from the bead base line outward in the radial direction by a distance of 1.0 to 1.5 times the separating point height Fh which is the distance between the bead base line and the point in the radial direction where the tyre to rim contact ceases.

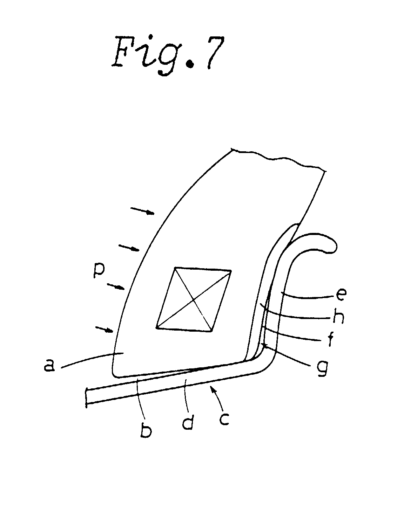

When assembling to the rim, as shown in Fig. 7, the pressure (p) in the tyre inner space is increased and this brings the bead outer surfaces (f) closer to the rim flange (e). Air in the gap (g) formed between the outer surface (f) and the rim flange (e) is forced out through the exhaust means (h).

However, if the inner end of the exhaust means extends to the bead bottom (b), if the fitting is imperfect between the bead bottom surface (b) and the rim seat (d) of the rim (c), for example, a seal is not obtained and inflation air escapes through the exhaust means.

On the other hand, as a result of observation using a CT scanner, a gap (g) formed at the time of assembly is known to be likely to be left in the region close to the bead bottom surface (b). In order to remove this gap (g) completely, it is necessary to contact tightly the lower part of the bead outer surface (f) to the rim flange. Because of these above mentioned reasons, the inner end of the exhaust means is set as at a minimum 1.0 times the separating point height Fh. Also, the position of the inner end of the exhaust means is best located outward as far as possible in the radial direction.

The exhaust means inner end being positioned at greater than 1.0 times the separating point height Fh is effective because on tyre/rim assembly the bead bottom surface and rim seat are pushed together with a strong fitting force. Accordingly, at first, as shown in Fig. 9, the lower part of the bead part is pushed onto the rim inclined inwards in the tyre axial direction. Therefore, the bead outer surface contacts the rim flange at a high point above the fitted separating point height Fh, so that the inner end of the exhaust means is positioned behind the separating point height Fh. However, if the inner end position of the exhaust means is over 1.5 times the separating point height Fh, even at the start of rim assembly, the inner end of the exhaust means does not communicate with the gap, and the air in the gap is not forced out.

An embodiment of the present invention will now be described by way of example, referring the attached drawings, in which;
Fig. 1 is a sectional view of a right half of a tyre of an embodiment of the present invention wherein the exhaust means comprises protrusions;
Fig. 2 is a sectional view magnifying the bead part of Fig. 1;
Fig. 3 is a tyre circumferential sectional view of protrusions;
Fig. 4 is a sectional view showing a bead outer surface and rim flange assembly;
Fig. 5 is a circumferential sectional view of a tyre bead showing another example of protrusion;
Fig. 6 is a sectional view showing prior art;
Fig. 7 is a sectional view showing the tyre/rim assembly of a conventional tyre;
Fig. 8 is a sectional view showing the intermediate action of assembling a tyre bead on a wheelrim; and
Fig. 9 is a sectional view showing the tyre bead assembled on the wheelrim.

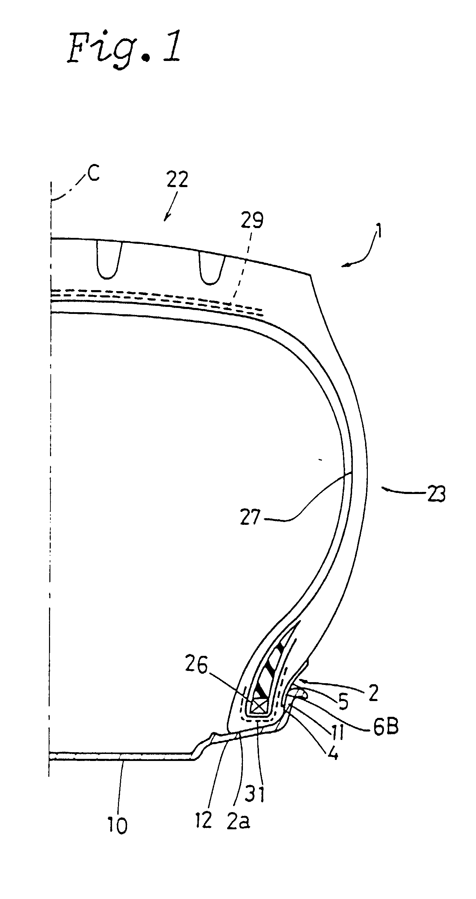

Figs. 1 to 5 show a pneumatic tyre 1 which is mounted on a normal rim 10 and inflated with normal internal pressure. The pneumatic tyre 1 is a tubeless tyre, and protrusions 6B are provided as exhaust means 6 extending in the tyre radial direction. The protrusions are on the bead outer surface 4 facing a rim flange 11.

The normal rim 10 has a pair of rim flanges 11, each receiving a bead outer surface 4 of a tyre 1; a pair of rim seats 12, each extending inwardly from the rim flange 11 and receiving the bead bottom surface 2a, and a well region 13 between the rim seats 12. The rim flange 11 and rim seat 12 are smoothly connected to each other through a curved heel region. A bead heel point, defined as the intersection of an extension line of the rim flange 11 and an e>:tension line of the rim seat 12. Also the bead base line is defined as a tyre axial line passing through the bead heel point.

The pneumatic tyre 1 comprises a tread part 22, side walls 23, 23 each extending radially inwards from both ends of the tread 22, and beads 2, 2 each positioned radially inside the end of the side wall 23. Also, the pneumatic tyre has a toroidal carcass 27 extending from the tread part 22 through the sidewalls 23 and turned up around the bead cores 26 one in each of two beads 2. The tread is reinforced by a belt layer 29 disposed radially outside the carcass 27.

The carcass 27 has a so-called radial or semiradial structure in which the carcass cords are inclined at an angle of 60 to 90 degrees with respect to the tyre equator C. The carcass cords are made of fibre cords such as nylon, polyester, rayon or aromatic polyamide.

The belt layer 29 is composed of at least two belt plies of belt cords which the cords of adjacent belt plies cross. The belt cords are made of cords such as nylon, polyester, rayon, and aromatic polyamide, or steel cords.

In this tyre, a reinforcing layer 31 enveloping the carcass 27 around the bead core 26 is provided at each bead 2. The reinforcing layer 31 is composed of a ply having organic fibre such as aromatic polyamide cords or steel cords arranged so as to cross the carcass cords. The rigidity of the bead 2 is enhanced by this reinforcing layer 31.

In the bead 2, moreover, a chafer 32 to provide the bead bottom surface 2a and bead outer surface 4 is disposed outside the reinforcing layer 31. The hardness of the rubber of the chafer 32 in this tyre is higher than that of the other rubber of the tyre bead 2. The hardness is larger than 65 degrees JIS A hardness.

When assembling the pneumatic tyre 1 to the rim 10, the bead bottom surface 2a is seated on the rim seat 12 of the normal rim 10, and the bead outer surface 4 abuts against the rim flange 11.

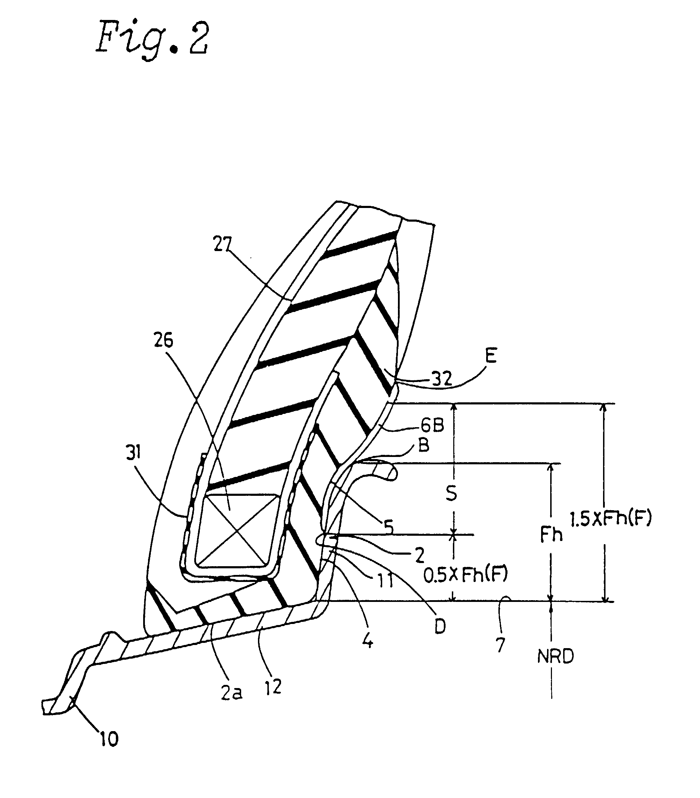

The rim flange 11, as shown in Fig. 2, has an upper end portion which is curved outside in the axial direction so as to go apart gradually from the bead outer surface 4. A separating point height Fh, defined as the distance in the tyre radial direction from the bead base line 7 to the separating point B at which the bead outer surface 4 separates from the rim flange 11 when the tyre 1 is correctly mounted on the normal rim 10.

On the bead outer surface 4, as mentioned above, there are protrusions 6B forming the exhaust means. Each of the protrusions 6B extends outwardly in the radial direction from an inner end D positioned within a region S. The region S is defined as a region remote from the bead base line 7 by a distance F of 1.0 to 1.5 times the separating point height Fh. That is, the height of the inner end D from the bead base line 7 in the radial direction is set to be in a range from 1.0 to 1.5 times the separating point height Fh.

On the bead outer surface 4, two linear protrusions 6B are formed or preferably eight or more, spaced at intervals around the tyre circumferential direction. The width WB of the protrusions 6B in the tyre circumferential direction is set at 0.3 to 5.0 mm or preferably in a range of 0.5 to 1.0 mm, and the height HB of the protrusions 6B in the tyre axial direction is set at 0.3 to 2.0 mm or preferably in a range of 0.5 to 1.0 mm.

The tops of the protrusions 6B, when the tyre and rim as assembled abut against the rim flange 11 before the bead outer surface 4 contacts the inner surface of the rim flange 11. As a result, an air passage for releasing air between the bead 2 and rim flange 11 is formed at both sides of each protrusion 6B.

By setting the height HB of the protrusions 6B at 1.0 mm or less the air passage of the assembly is closed by elastic deformation by the pressure of the bead and then leakage of air from the tyre inner space is more securely prevented.

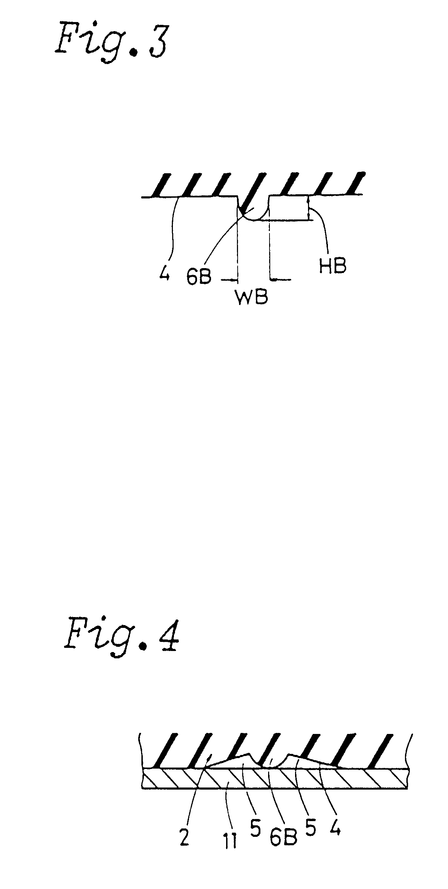

Meanwhile, the protrusions 6B may be formed integrally with the bead rubber forming the bead outer surface 4 as shown in Fig. 4. Alternatively the protrusions 6B may be formed separately from the bead rubber as shown in Fig. 5, and the separate protrusions 6B may be placed between the bead outer surface 4 and rim flange 11 when assembling the bead 2 onto its rim, thereby forming the exhaust means 5.

The action of forcing out the air from the gap (g) between the bead part 2 and rim flange 11 formed by the protrusions 6B will now be explained.

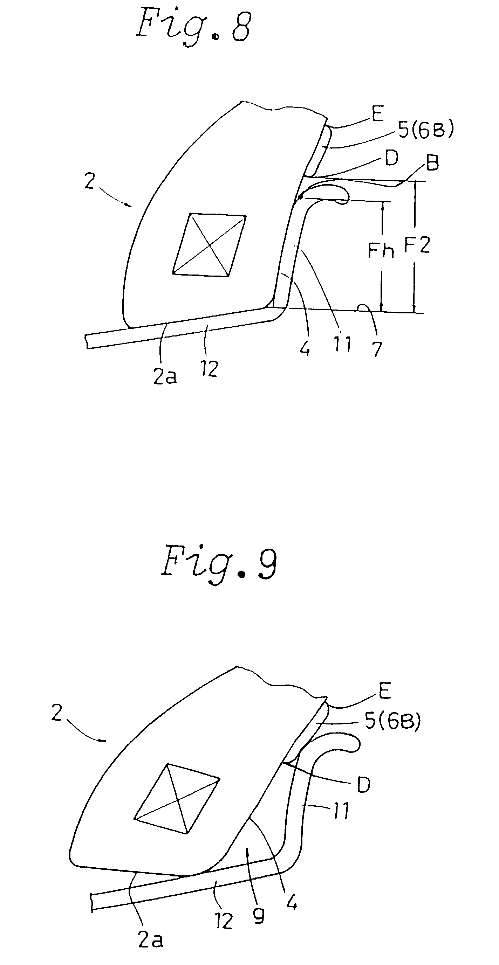

When the inner end D of the grooves 6A is remote from the bead base line 7 by a distance F2 of 1.0 times to 1.5 times the separating point height Fh as shown in Fig. 8, and the outer end E is positioned apart from the inner end D by 5 to 15 mm in the radial direction:

This is used when the bending rigidity of the bead 2 is low. Then the bead 2 is greatly inclined to the radial direction of the tyre as shown in Fig. 9 on assembly. The bead outer surface 4 is fitted onto the rim 10 at a large inclination to the rim flange 11. As the inner ends D of the protrusions are lower than the separating point B, the air in the gap (g) is forced out as shown in Fig. 9. Thus the protrusions 6B serve as the exhaust means 5 for air to escape from the gap (g).

As mentioned above, even though the position of the inner end D is set higher than 1.0 times the separating point height Fh, the inner end D of the protrusions 6B may be always positioned inwards in the radial direction by inserting the bead 2 into the normal rim 10 at a large inclination. As a result, the air passage allowing escape from the gap (g) is temporary formed at the time of tyre assembly. Then, upon completion of tyre to rim assembly, the protrusions 6B are no longer positioned between the confronting surfaces of the bead outer surface 4 and the rim flange 11, and an assembly of high precision results.

To illustrate the invention tyres of size 205/65R15, were assembled onto a normal rim of 6.55JJ x 15, and inflated to an internal pressure of 2.0 kg/cm². The tyres were those having protrusions according to the present invention as shown in Figure 1. The maximum size of the gap (g) on rim assembly was measured. A conventional tyre (Reference) without air vent grooves as shown in Fig. 7 was similarly assembled to a rim, and the gap (g) was measured. The gap size was measured by using a CT scanner (Computer Topography Scanner). The measurement of the gap is expressed by the mean of measuring four points each on the front and rear side.

To measure the rim deviation, the test tyres were installed on a car, and travelling at a speed of 80 km/h, a brake test of 0.8 G measured by a gravitational accelerometer was repeated 20 times, the total of the rim deviation of tyre and rim was measured.

To analyse vibration, the test car was driven for 100 km, and the presence or absence of vibration was judged by the feeling of the driver.

The results of measurement are shown in Table 1.

As a result of the tests, as shown in Table 1, in the embodiment, as compared with the reference example, the gap in the rim assembly was slight, and the rim deviation was small, and formation of vibrations after use was suppressed.

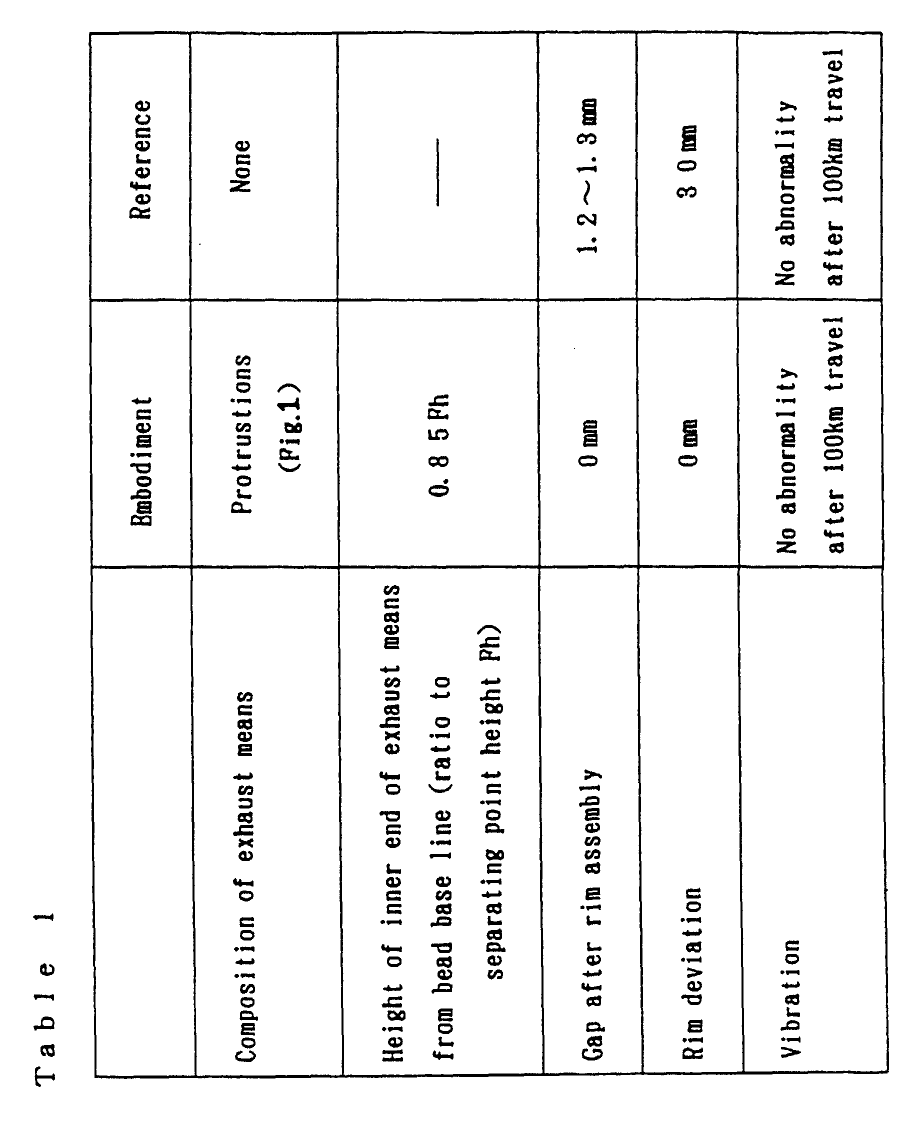

## Claims

1. A pneumatic tyre for mounting on a normal rim (10), comprising a pair of beads (2) each having a bead bottom surface (2a) seating on a rim seat (12) of the normal rim and bead outer surface (4) connected to the bead bottom surface (2a) and arranged to abut a rim flange (11) of the normal rim, wherein the bead outer surface (4) has exhaust means (6) composed of protrusions (6b) extending outwards in the radial direction from an inner end (D) of the exhaust means (6) so as to form an air passage for escaping air from between the rim flange (11) and the bead outer surface (2a) on assembly of the tyre to the rim, characterised in that the inner end (D) of the exhaust means (6) is positioned within a region remote from a bead base line by a distance of 1.0 to 1.5 times a separating point height Fh defined as the height in the radial direction from the bead base line to a separating point (B) at which the bead outer surface (2a) separates from the rim flange (11) and the outer end (E) is spaced from the inner end (D) by a distance of 5 to 15 mm in the radial direction.

2. A pneumatic tyre according to claim 1, characterised in that the exhaust means (6) is composed of at least two protrusions (6b) disposed at intervals around the tyre circumferential direction.

3. A pneumatic tyre according to claim 1 or 2, characterised in that the exhaust means (6) is composed of at least eight protrusions (6b) disposed at intervals around the tyre circumferential direction.

4. A pneumatic tyre according to any of claims 1 to 3, characterised in that exhaust means (6) is composed of protrusions (6b) the width of which in the tyre circumferential direction is 0.3 to 5.0 mm.

5. A pneumatic tyre according to any of claims 1 to 4, characterised in that the exhaust means (6) is composed of protrusions (6b) the width of which in the tyre circumferential direction is 0.5 to 1.0 mm.

6. A pneumatic tyre according to any of claims 1 to 5, characterised in that the exhaust means (6) is composed of protrusions (6b) the depth or height of which in the tyre axial direction is 0.5 to 2.0 mm.

7. A pneumatic tyre according to any of claims 1 to 6, characterised in that the exhaust means (6) is composed of protrusions (6b) the depth or height of which in the tyre axial direction is 0.7 to 1.0 mm.

## Patentansprüche

1. Luftreifen zum Aufziehen auf eine normale Felge (10), umfassend zwei Wülste (2), die jeweils eine Wulstunterfläche (2a), die auf einem Felgensitz (12) der normalen Felge sitzt, und eine Wulstaußenfläche (4) aufweisen, die mit der Wulstunterfläche (2a) verbunden ist und derart angeordnet ist, daß sie an einem Felgenhorn (11) der normalen Felge anliegt, wobei die Wulstaußenfläche (4) ein Entlüftungsmittel (6) aufweist, das aus Vorsprüngen (6b) besteht, die sich in der Radialrichtung von einem Innenende (D) des Entlüftungsmittels (6) aus in Richtung nach außen erstrecken, so daß ein Luftdurchgang gebildet ist, damit Luft beim Aufziehen des Reifens auf die Felge von zwischen dem Felgenhorn (11) und der Wulstaußenfläche (2a) entweichen kann, dadurch gekennzeichnet, daß das Innenende (D) des Entlüftungsmittels (6) in einem Bereich fern von einer Wulstbasislinie in einem Abstand angeordnet ist, der das 1,0 bis 1,5fache einer Trennungspunkthöhe Fh beträgt, die als die Höhe in der Radialrichtung von der Wulstbasislinie aus zu einem Trennungspunkt (B), an dem die Wulstaußenfläche (2a) sich von dem Felgenhorn (11) trennt, definiert ist, und daß das Außenende (E) von dem Innenende (D) in einem Abstand von 5 bis 15 mm in der Radialrichtung beabstandet ist.

2. Luftreifen nach Anspruch 1,
dadurch gekennzeichnet, daß das Entlüftungsmittel (6) aus mindestens zwei Vorsprüngen (6b) besteht, die in Intervallen um die Umfangsrichtung des Reifens herum angeordnet sind.

3. Luftreifen nach Anspruch 1 oder 2,
dadurch gekennzeichnet, daß das Entlüftungsmittel (6) aus mindestens acht Vorsprüngen (6b) besteht, die in Intervallen um die Umfangsrichtung des Reifens herum angeordnet sind.

4. Luftreifen nach einem der Ansprüche 1 bis 3,
dadurch gekennzeichnet, daß das Entlüftungsmittel (6) aus Vorsprüngen (6b) besteht, deren Breite in der Umfangsrichtung des Reifens 0,3 bis 5,0 mm beträgt.

5. Luftreifen nach einem der Ansprüche 1 bis 4,
dadurch gekennzeichnet, daß das Entlüftungsmittel (6) aus Vorsprüngen (6b) besteht, deren Breite in der Umfangsrichtung des Reifens 0,5 bis 1,0 mm beträgt.

6. Luftreifen nach einem der Ansprüche 1 bis 5,
dadurch gekennzeichnet, daß das Entlüftungsmittel (6) aus Vorsprüngen (6b) besteht, deren Tiefe oder Höhe in der Axialrichtung des Reifens 0,5 bis 2,0 mm beträgt.

7. Luftreifen nach einem der Ansprüche 1 bis 6,
dadurch gekennzeichnet, daß das Entlüftungsmittel (6) aus Vorsprüngen (6b) besteht, deren Tiefe oder Höhe in der Axialrichtung des Reifens 0,7 bis 1,0 mm beträgt.

## Revendications

1. Pneumatique destiné à être monté sur une jante normale (10), comprenant une paire de talons (2) ayant chacun une surface inférieure (2a) de talon en appui sur un siège (12) de la jante normale et une surface externe (4) de talon raccordée à la surface inférieure (2a) de talon et destinée à être en butée contre un flasque (11) de la jante normale, dans lequel la surface externe (4) de talon comporte un dispositif d'échappement (6) composé de saillies (6b) s'étendant vers l'extérieur dans la direction radiale depuis une extrémité interne (D) du dispositif d'échappement (6) pour la formation d'un passage d'air permettant l'échappement de l'air entre le flasque (11) de la jante et la surface externe (2a) du talon lors de l'assemblage du pneumatique sur la jante, caractérisé en ce que l'extrémité interne (D) du dispositif d'échappement (6) est placée dans une région distante d'une ligne de base de talon à une distance comprise entre 1,0 et 1,5 fois la hauteur Fh d'un point de séparation qui est définie comme étant la hauteur en direction radiale comprise entre la ligne de base de talon et un point de séparation (B) auquel la surface externe (2a) de talon se sépare du flasque (11) de la jante et l'extrémité externe (E) est séparée de l'extrémité interne (D) par une distance de 5 à 15 mm en direction radiale.

2. Pneumatique selon la revendication 1, caractérisé en ce que le dispositif d'échappement (6) est composé d'au moins deux saillies (6b) séparées par des intervalles en direction circonférentielle du pneumatique.

3. Pneumatique selon la revendication 1 ou 2, caractérisé en ce que le dispositif d'échappement (6) est composé d'au moins huit saillies (6b) séparées par des intervalles en direction circonférentielle du pneumatique.

4. Pneumatique selon l'une des revendications 1 à 3, caractérisé en ce que le dispositif d'échappement (6) est composé de saillies (6b) dont la largeur dans la direction circonférentielle du pneumatique est comprise entre 0,3 et 5,0 mm.

5. Pneumatique selon l'une des revendications 1 à 4, caractérisé en ce que le dispositif d'échappement (6) est composé de saillies (6b) dont la largeur dans la direction circonférentielle du pneumatique est comprise entre 0,5 et 1,0 mm.

6. Pneumatique selon l'une des revendications 1 à 5, caractérisé en ce que le dispositif d'échappement (6) est composé de saillies (6b) dont la profondeur ou la hauteur dans la direction axiale du pneumatique est comprise entre 0,5 et 2,0 mm.

7. Pneumatique selon l'une des revendications 1 à 6, caractérisé en ce que le dispositif d'échappement (6) est composé de saillies (6b) dont la profondeur ou la hauteur dans la direction axiale du pneumatique est comprise entre 0,7 et 1,0 mm.
